# EUROPÄISCHE PATENTSCHRIFT

(11) **EP 1 765 636 B1**
(45) Veröffentlichungstag und Bekanntmachung des Hinweises auf die Patenterteilung: **16.02.2011**
(21) Anmeldenummer: 05774176.1
(22) Anmeldetag: 01.07.2005
(51) Int. Cl.: B60P 3/22, B60S 5/02

(54) **MEHRFACHÜBERFÜLLSICHERUNG**
SAFETY DEVICE TO PREVENT OVERFILLING
DISPOSITIF DE SECURITE EMPECHANT LE SURREMPLISSAGE D'UNE PLURALITE DE RESERVOIRS

(30) Priorität: 15.07.2004 AT 12072004
(43) Veröffentlichungstag der Anmeldung: 28.03.2007
(73) Patentinhaber: Security & Electronic Technologies GmbH, 2544 Leobersdorf (AT)
(72) Erfinder: HÖCKNER, Dagmar, A-2483 Ebreichsdorf (AT)
(74) Vertreter: Puchberger, Peter
(86) Internationale Anmeldenummer: PCT/EP2005/053128
(87) Internationale Veröffentlichungsnummer: WO 2006/005686

(56) Entgegenhaltungen:
- EP-A- 0 668 240
- DE-U1- 20 016 410
- US-B1- 6 224 353

## Beschreibung

### Technisches Umfeld

Die Erfindung bezieht sich auf eine Anordnung zur Überfüllsicherung einer Mehrzahl von Treibstofftanks gemäß dem in der EP0668240 A offenbarten Oberbegriff des Anspruches 1.

Durch die DE 20016410 U wurde ein Tankfahrzeug bekannt, das mehrere Kammern aufweist, die mit je einem Ventil versehen sind, das zum Befüllen und Entleeren der entsprechenden Kammer dient. In diesen Kammern ist je ein Füllstandssensor angeordnet, wobei die Füllstandssensoren mit einem Rechner verbunden sind, der die Füll- und Abgabemengen der einzelnen Kammern berechnet. Dabei ist dieser Rechner über eine drahtlose Übertragungsstrecke mit einer Bedieneinheit verbunden, die Anzeige- und Eingabeelemente zur Überwachung und Steuerung zum Befüllen oder Entleeren der Tanks einer Tankstelle aufweist und mit der die erforderlichen Operationen, wie das Ansteuern von Ventilen überwacht werden können.

Bei dieser Lösung ergibt sich jedoch der Nachteil, dass eine Überwachung des Füllstandes nur indirekt erfolgen kann. Dabei hängt aber die Möglichkeit der Vermeidung einer Überfüllung von dem Zusammenspiel der Füllstandsanzeiger mit dem Rechner ab, in dessen Speicher den jeweiligen Kammern bzw. Tanks entsprechende Algorithmen eingegeben sein müssen. Da die Kammern bzw. Tanks eines Tankfahrzeuges meist keine einfachen und leicht berechenbaren Formen aufweisen, ergeben sich dabei meist entsprechende Ungenauigkeiten.

Beim Befüllen von Tanks von Tankstellen ergibt sich immer das Problem, dass ein Überfüllen der meist unterirdisch angelegten Tanks schon aus Umweltschutzgründen vermieden werden muss. Dazu sind meist optische oder Thermistor-Grenzwertgeber vorgesehen, wobei diese beobachtet werden müssen, um dann die weitere Zufuhr von Kraftstoff in die Tanks der Tankstelle zu unterbinden. Dabei ergeben sich aber entsprechende Unsicherheiten.

### Offenbarung der Erfindung

### Technisches Problem

Ziel der Erfindung ist-es, diese Nachteile zu vermeiden und eine Einrichtung der eingangs erwähnten Art vorzuschlagen, bei der beim Befüllen von Tanks einer Tankstelle ein Überfüllen sicher vermieden ist und andererseits die Kapazität der Tanks weitgehend ausgenutzt werden kann.

### Technische Lösung

Erfindungsgemäß wird dies bei einer Anordnung der eingangs erwähnten Art durch die kennzeichnenden Merkmale des Anspruches 1 erreicht.

Durch die vorgeschlagenen Maßnahmen kann das Erreichen eines vorgegebenen Füllstandes auf einfache Weise übertragen und ein automatisches Schließen der entsprechenden Zuflussventile eingeleitet werden. Dabei kann jedes Tankfahrzeug einen entsprechenden Empfänger fest eingebaut haben und auch den Sender mitführen. Dieser kann einfach auf die Schnittstelle, eben den Stecker, aufgesteckt und nach Beendigung des Füllvorganges wieder abgenommen werden. Dabei kann aufgrund der Abfrageschaltung das Erreichen des jeweiligen vorgesehenen maximalen Füllstandes eines jeden einzelnen Tanks einer Tankstelle abgefragt werden.

Da der Sender mit einem bestimmten Tankfahrzeug stets mitgeführt werden kann, kann dieser exakt auf die Übertragungsfrequenz des Empfängers abgestimmt werden und es erübrigt sich ein allfälliges Einstellen einer entsprechenden Übertragungsfrequenz auf einen Empfänger.

Durch die Merkmale des Anspruchs 2 ergibt sich der Vorteil, dass eine Überprüfung von Identifizierungscodes auf einfache Weise durchgeführt werden kann.

Durch die Merkmale des Anspruchs 3 ergibt sich der Vorteil, dass das Füllen der Tanks einer Tankstelle praktisch weitgehend automatisiert werden kann. Es genügt dazu, die entsprechenden Schlauchverbindungen herzustellen und den Sender auf der Schnittstelle zu montieren. Nach der Aktivierung des Senders können die entsprechenden Ventile geöffnet werden und der Füllvorgang gestartet werden. Bei Erreichen des vorgesehenen maximalen Füllstandes bewirkt die Übertragung eines vom Füllstand-Grenzwertgeber erzeugten Signals zum Empfänger ein Schließen des entsprechenden Ventils.

### Kurze Beschreibung von Zeichnungen

Die Erfindung wird nun an Hand der beispielhaften Zeichnung näher erläutert. Die einzige Figur zeigt schematisch eine erfindungsgemäße Anordnung.

### Die beste Art und Weise, die Erfindung auszunutzen

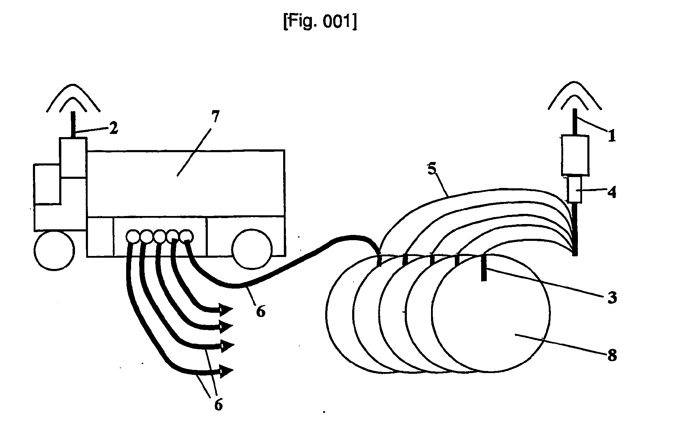

Im Bereich einer nicht näher dargestellten Tankstelle sind in Fig. 1 mehrere Tanks bzw. Treibstofftanks 8 angeordnet. In jedem dieser Tanks 8 ist ein Füllstands-Grenzwertgeber 3 angeordnet, die bei Erreichen eines vorbestimmten Pegels, zweckmäßigerweise des Maximalpegels, in den Tanks 8 ein Signal erzeugen.

Bei diesen Grenzwertgebern 3 kann-es sich um bekannte optische Systeme handeln. Bei diesen wird Licht ausgesandt und an einem Glasprisma an der Sonde definiert gebrochen und auf ein lichtempfindliches Element zurückgeworfen. Wird das Prisma von der Flüssigkeit erreicht, so ändert sich der Brechungsindex und es kommt weniger oder gar kein Licht auf das lichtempfindliche Element zurück, wodurch ein Signal ausgelöst wird.

Diese Füllstands-Grenzwertgeber 3 sind über elektrische Leitungen 5 mit einer Schnittstelle 4 verbunden, die im einfachsten Fall durch einen Stecker gebildet sein kann.

Auf diese Schnittstelle 4 kann ein transportabler Sender 1 aufgesteckt werden, der vorzugsweise mit einer Abfrageschaltung, z.B. einem Multiplexer, versehen sein kann. Dieser Sender 1 wird zweckmäßigerweise mit einem Tankfahrzeug 7 mitgeführt, in dem ein Empfänger 2 eingebaut ist, der mit dem Sender 1 kommunizieren kann.

Beim Befüllen der Tanks 3 werden Schläuche 6 vom Tankfahrzeug 7 zu den Tanks 8 verlegt und an die letzteren angeschlossen.

Nach dem Aktivieren des Senders 1 wird eine drahtlose Kommunikationsverbindung zwischen dem Sender 1 und dem Empfänger 2 aufgebaut. Vorteilhafterweise wird dabei eine Funkverbindung aufgebaut, wobei der Sender 1 und der Empfänger 2, die vorzugsweise als Messumformer aufgebaut sind, aufeinander abgestimmt und kodiert sind. Auf diese Weise wird ausgeschlossen, dass ein anderes System, das sich in der Reichweite des Senders 1 bzw. des Empfängers 2 befindet, Einfluss auf die Verbindung zwischen diesen nehmen kann. Dabei kann das Funkprotokoll digital ausgeführt sein.

Während der Kommunikation zwischen dem Sender 1 und dem Empfänger 2 und einer dem Sender 1 zugeordneten Abfrageschaltung können die einzelnen Füllstands-Grenzwertgeber 3 in den einzelnen Tanks 8 in rascher Folge abgefragt werden und die Informationen an den Sender 1 übertragen werden. Damit es nicht möglich ist, dass sich Sender 1 und/oder Empfänger 2 unterschiedlicher Anordnungen unbeabsichtigt beeinflussen, wird die Kommunikation zwischen Sender 1 und Empfänger 2 einer Anordnung kodiert.

Der Sender 1 ist zweckmäßigerweise mit einer Auswerteschaltung verbunden, die bei Eintreffen eines entsprechenden, das Erreichen des vorgesehenen maximalen Pegelstandes anzeigenden Signals ein den an den betreffenden Tank 8 angeschlossenen Schlauch 6 steuerndes Ventil absperrt.

Dabei kann vorgesehen sein, dass alle Ventile oder nur einzelne, in der Folge des Eintreffens entsprechender, dem maximalen Füllstand entsprechender Signale gesperrt/verschlossen werden.

Die Funkverbindung zwischen dem auf der Schnittstelle 4 montierten Sender 1 und dem in dem Tankfahrzeug 7 mitgeführten Empfänger 2 kann auf einem geeignetem Frequenzband, wie z.B. dem SRD-Band (Short Range Device -ehemals LPD, Low Power Device genannt) erfolgen.

## Patentansprüche

1. Anordnung zur Überfüllsicherung einer Mehrzahl von Treibstofftanks (8) einer Tankstelle, die insbesondere gleichzeitig, durch ein Mehrkammer-Tankfahrzeug (7) befüllt werden und wobei die Treibstofftanks (8) Füllstand-Grenzwertgeber (3), wie z.B. optische oder Thermistor Sonden, aufweisen, die mit mindestens einem Sender (1) zur Übertragung eines Signals bei Erreichen des Grenzwertes verbunden sind, und wobei ein Empfänger (2) am Tankfahrzeug (7) zur Steuerung eines Tankventils vorgesehen ist, **dadurch gekennzeichnet, dass** die Übertragung des Signals drahtlos ist, und dass sämtliche Füllstands-Grenzwertgeber (3) der Treibstofftanks (8) an der Tankstelle mit jeweils einer Signalleitung (5) verbunden sind, die zu einer gemeinsamen Schnittstelle (4) in Form eines Steckers führen, und dass lediglich ein Sender (1) zusammen mit einer Abfrageschaltung zum Anschluss an den Stecker vorgesehen ist, welcher Sender (1) mit dem gemeinsamen, am Tankfahrzeug (7) angeordneten Empfänger (2) zusammenwirkt, der mit einer synchronisierten Multiplexschaltung bzw. einer Schaltung zum Empfang adresscodierter Signale des Senders (1) verbunden ist, die an eine Steuerung zur selektiven Abschaltung der Tankventile am Tankfahrzeug (7) angeschlossen ist.

2. Anordnung nach Anspruch 1, **dadurch gekennzeichnet, dass** Sender (1) und Empfänger (2) jeweils als Messumformer zur Abgabe, zum Empfang und zur Konkordanzüberprüfung von Identifizierungscodes ausgebildet sind.

3. Anordnung nach Anspruch 1 oder Anspruch 2, **dadurch gekennzeichnet, dass** der an die Schnittstelle (4) bzw. den Stecker anschließbare Sender (1) bei Anschluss an diesen und bei Anliegen eines Bereitschaftssignals eines jeden Grenzwertgebers (3) selektive Einschaltsignale an den Empfänger am Tankfahrzeug (7) übermittelt, zur selektiven Freigabe des Öffnens der einzelnen Ventile der Kammern des Tankfahrzeuges (7).

## Claims

1. An arrangement for securing against overfilling of a plurality of fuel tanks (8) of a filling station that are filled, in particular simultaneously, by a multi-chamber tanker vehicle (7), and wherein the fuel tanks (8) have level-threshold indicators (3), such as, for example, optical or thermistor probes, that are linked to at least one transmitter (1) for the transmission of a signal when the threshold value is reached, and wherein a receiver (2) is provided on the tanker vehicle (7) for the control of a tank valve, **characterised in that** the transmission of the signal is wireless, and **in that** all the level-threshold indicators (3) of the fuel tanks (8) are linked to the filling station with a respective signal line (5) leading to a common interface (4) in the form of a plug, and **in that** merely one transmitter (1) is provided together with an interrogating circuit arrangement for connection to the plug, which transmitter (1) cooperates with the common receiver (2) that is arranged on the tanker vehicle (7) and is linked to a synchronized multiplex circuit arrangement or a circuit arrangement for receiving address-coded signals of the transmitter (1), which circuit arrangement is connected to a control for selectively shutting off the tank valves on the tanker vehicle (7).

2. An arrangement according to claim 1, **characterised in that** the transmitter (1) and the receiver (2) are each formed as measuring transducers for the delivery, reception and conformity-checking of identification codes.

3. An arrangement according to claim 1 or claim 2, **characterised in that** the transmitter (1), which can be connected to the interface (4) or the plug, upon connection to the latter and application of a ready signal of each threshold indicator (3) conveys selective switch-on signals to the receiver on the tanker vehicle (7) for the selective enabling of the opening of the individual valves of the chambers of the tanker vehicle (7).

## Revendications

1. Dispositif de sécurité empêchant le surremplissage d'une pluralité de cuves (8) de carburant d'un poste de ravitaillement en essence, qui sont remplies, notamment simultanément, par un véhicule (7) citerne à plusieurs chambres et dans lequel les cuves (8) de carburant ont des indicateurs (3) de valeur limite de niveau, comme par exemple des sondes optiques ou à thermistance, qui sont reliés à au moins un émetteur (1) pour la transmission d'un signal lorsque la valeur limite est atteinte et dans lequel un récepteur (2) sur le véhicule (7) citerne est prévu pour commander une vanne de citerne, **caractérisé en ce que** la transmission du signal s'effectue sans fil et **en ce que** tous les indicateurs (3) de valeur limite de niveau des cuves (8) de carburant au poste de ravitaillement en carburant sont reliés à respectivement des lignes (5) de signal qui mènent à une interface (4) commune sous la forme d'un connecteur et **en ce que** seulement un émetteur (1) est prévu, ensemble avec un circuit d'interrogation, pour le raccordement au connecteur, lequel émetteur (1) coopère avec le récepteur (2) commun monté sur le véhicule (7) citerne, récepteur qui est relié à un circuit de multiplexage synchronisé ou à un circuit de réception de signaux codés en adresse de l'émetteur (1), circuit qui est raccordé à une commande de fermeture sélective de la vanne de citerne du véhicule (7) citerne.

2. Dispositif suivant la revendication 1, **caractérisé en ce que** l'émetteur (1) et le récepteur (2) sont constitués respectivement sous la forme de transducteurs de mesure pour l'émission, pour la réception et pour le contrôle de concordance de codes d'identification.

3. Dispositif suivant la revendication 1 ou la revendication 2, **caractérisé en ce que** l'émetteur (1) pouvant être raccordé à l'interface (4) ou au connecteur transmet, lors du raccordement à celui-ci et lors de l'application d'un signal suivant lequel chaque émetteur (3) de valeur limite est prêt, des signaux sélectifs de mise en circuit au récepteur du véhicule (7) citerne, pour le déclenchement sélectif de l'ouverture des diverses vannes des chambres du véhicule (7) citerne.
